# EUROPÄISCHE PATENTANMELDUNG

(11) **EP 1 744 512 A1**
(43) Veröffentlichungstag der Anmeldung: **17.01.2007**
(21) Anmeldenummer: 05015257.8
(22) Anmeldetag: 13.07.2005
(51) Int. Cl.: H04L 27/26

(54) **Mehrträger-System mit Senden der Synchronisationsbitfolge auf mehreren Subträgern**

(71) Anmelder: SIEMENS AKTIENGESELLSCHAFT, 80333 München (DE)
(72) Erfinder: Arnaoudov, Rossen, 81549 München (DE); Eichinger, Josef, 85464 Neufinsing (DE); Schulz, Egon, Dr., 80993 München (DE)

(57) **Zusammenfassung**

Die Erfindung betrifft ein Verfahren zur Übertragung von Informationen per Funk von einem Sender zu einem Empfänger (MS1, MS2, MS3), bei dem zur Kommunikation ein in eine Mehrzahl von Subträgern (SC1, SC2, SC3, SC4, SC5, SC6, SC7, SC8, SC9, SC10) aufgeteiltes Frequenzband (FB) eingesetzt wird. Der Sender versendet eine Synchronisationsbitfolge (PILOT) zur empfängerseitigen Verwendung zur Synchronisation. Erfindungsgemäß sendet der Sender die Synchronisationsbitfolge (PILOT) gleichzeitig auf einer ersten Mehrzahl von Subträgern (SC1, SC2, SC3, SC4, SC5, SC6, SC7, SC8, SC9, SC10). Weiterhin betrifft die Erfindung einen Sender und einen Empfänger (MS1, MS2, MS3) zur Durchführung des Verfahrens.

## Beschreibung

Die Erfindung betrifft Verfahren zur Übertragung von Informationen per Funk von einem Sender zu einem Empfänger, bei dem zur Kommunikation ein in eine Mehrzahl von Subträgern aufgeteiltes Frequenzband eingesetzt wird. Weiterhin betrifft die Erfindung einen Sender und einen Empfänger zur Durchführung der Verfahren.

In Funkkommunikationssystemen werden Nachrichten, beispielsweise mit Sprachinformation, Bildinformation, Videoinformation, SMS (Short Message Service), MMS (Multimedia Messaging Service) oder anderen Daten, mit Hilfe von elektromagnetischen Wellen über eine Funkschnittstelle zwischen sendender und empfangender Station übertragen. Bei den Stationen kann es sich hierbei je nach konkreter Ausgestaltung des Funkkommunikationssystems um verschiedenartige Teilnehmerstationen oder netzseitige Funkstationen handeln. In einem Mobilfunk - kommunikationssystem handelt es sich bei zumindest einem Teil der Teilnehmerstationen um mobile Funkstationen. Das Abstrahlen der elektromagnetischen Wellen erfolgt mit Trägerfrequenzen, die in dem für das jeweilige System vorgesehenen Frequenzband liegen.

Mobilfunkkommunikationssysteme sind oftmals als zellulare Systeme, z.B. nach den bekannten Standards GSM (Global System for Mobile Communication) oder UMTS (Universal Mobile Telecommunications System), mit einer Netzinfrastruktur bestehend z.B. aus Basisstationen, Einrichtungen zur Kontrolle und Steuerung der Basisstationen und weiteren netzseitigen Einrichtungen ausgebildet. Außer diesen weiträumig organisierten (supralokalen) zellularen, hierarchischen Funknetzen gibt es auch drahtlose lokale Netze (WLANs, Wireless Local Area Networks) mit einem in der Regel räumlich deutlich stärker begrenzten Funkabdeckungsbereich. Beispiele verschiedener Standards für WLANs sind HiperLAN, DECT, IEEE 802.11, Bluetooth und WATM.

Der Zugriff von Teilnehmerstationen auf das gemeinsame Übertragungsmedium wird bei Funkkommunikationssystemen durch Vielfachzugriffsverfahren/Multiplexverfahren (Multiple Access, MA) geregelt. Bei diesen Vielfachzugriffen kann das Übertragungsmedium im Zeitbereich (Time Division Multiple Access, TDMA), im Frequenzbereich (Frequency Division Multiple Access, FDMA), im Codebereich (Code Division Multiple Access, CDMA) oder im Raumbereich (Space Division Multiple Access, SDMA) zwischen den Teilnehmerstationen aufgeteilt werden. Auch Kombinationen von Vielfachzugriffsverfahren sind möglich, wie z.B. die Kombination eines Frequenzbereichs-Vielfachzugriffsverfahrens mit einem Codebereichs-Vielfachzugriffsverfahren.

Um eine möglichst effiziente Übertragung von Informationen zu erreichen, zerlegt man das gesamte zur Verfügung stehende Frequenzband in mehrere Subträger (Multicarrier- bzw. Mehrträgerverfahren). Die den Mehrträgersystemen zugrunde liegende Idee ist es, das Ausgangsproblem der Übertragung eines breitbandigen Signals in die Übertragung mehrerer schmalbandiger Signale zu überführen. Dies hat u.a. den Vorteil, dass die am Empfänger erforderliche Komplexität reduziert werden kann. Ferner ermöglicht die Aufteilung der verfügbaren Bandbreite in mehrere schmalbandige Subträger eine deutlich höhere Granularität der Datenübertragung hinsichtlich der Verteilung der zu übertragenden Daten auf die unterschiedlichen Subträger, d.h., die Funkressourcen können mit einer großen Feinheit auf die zu übertragenden Daten bzw. auf die Teilnehmerstationen verteilt werden. Insbesondere bei Übertragungen mit variabler Datenrate oder bei burstartigem Datenverkehr kann die verfügbare Bandbreite durch die Zuweisung einer Anzahl von Subträgern an unterschiedliche Teilnehmerstationen effizient ausgenutzt werden.

Ein Beispiel für ein Mehrträgerübertragungsverfahren ist OFDM (Orthogonal Frequency Division Multiplexing), bei welchem für die Subträger zeitlich annähernd rechteckige Pulsformen verwendet werden. Der Frequenzabstand der Subträger wird derart gewählt, dass im Frequenzraum bei derjenigen Frequenz, bei welcher das Signal eines Subträgers ausgewertet wird, die Signale der anderen Subträger einen Nulldurchgang aufweisen. Somit sind die Subträger orthogonal zueinander. Bei FMT (Frequency Multi Tone) müssen die Subträger nicht orthogonal zueinander sein. Während bei OFDM ein Empfänger alle Subträger empfangen und auswerten muss, ist es bei FMT möglich, dass der Empfänger nur manche Subträger empfängt und auswertet.

Der Erfindung liegt die Aufgabe zugrunde, Verfahren zur Kommunikation per Funk aufzuzeigen, bei welchen Sender und Empfänger auf einem in eine Mehrzahl von Subträgern aufgeteilten Frequenzband miteinander kommunizieren. Weiterhin soll ein geeigneter Sender und ein ebensolcher Empfänger zur Durchführung der Verfahren aufgezeigt werden.

Diese Aufgabe wird durch ein Verfahren mit den Merkmalen des Anspruchs 1,sowie durch ein Verfahren und Vorrichtungen mit Merkmalen von nebengeordneten Ansprüchen gelöst. Vorteilhafte Ausgestaltungen und Weiterbildungen sind Gegenstand von Unteransprüchen.

Bei dem erfindungsgemäßen Verfahren zur Übertragung von Informationen per Funk von einem Sender zu einem Empfänger wird zur Kommunikation ein in eine Mehrzahl von Subträgern aufgeteiltes Frequenzband eingesetzt. Der Sender versendet eine Synchronisationsbitfolge zur empfängerseitigen Verwendung zur Synchronisation. Erfindungsgemäß sendet der Sender die Synchronisationsbitfolge gleichzeitig auf einer ersten Mehrzahl von Subträgern.

Bei einem zweiten erfindungsgemäßen Verfahren empfängt der Empfänger die Synchronisationsbitfolge gleichzeitig auf einer zweiten Mehrzahl von Subträgern.

Die erfindungsgemäßen Verfahren sind auf verschiedene Mehrträger-Funkkommunikationssysteme anwendbar, so z.B. auf OFDM oder FMT Systeme. Bei dem Sender handelt es sich vorzugsweise um eine netzseitige Funkstation des Funkkommunikationssystems, wie z.B. um eine Basisstation eines zellularen Systems oder um einen Funkzugangspunkt eines lokalen Systems. Bei dem Empfänger handelt es sich vorzugsweise um eine stationäre oder mobile Teilnehmerstation, in diesem Fall betrifft die Erfindung die Informationsübertragung in Abwärtsrichtung.

Es wird eine Synchronisationsbitfolge versendet, welche dazu bestimmt ist, von dem Empfänger zu Synchronisationszwecken eingesetzt zu werden. Die Synchronisation betrifft vorzugsweise die Zeitsynchronisation, zusätzlich oder alternativ kann die Synchronisationsbitfolge auch zur Frequenzsynchronisation verwendet werden. Die Synchronisationsbitfolge wird nicht nur auf einem Subträger versendet, vielmehr setzt der Sender eine Mehrzahl von Subträgern gleichzeitig zur Versendung der gleichen Synchronisationsbitfolge ein. Dies bedeutet, dass die zur Synchronisation versendeten Symbole im Frequenzbereich ausschließlich aus Symbolen mit dem gleichen Eintrag an jeder Stelle des jeweiligen Symbols bestehen. Ein Symbol ist hierbei ein Vektor, wobei der erste Eintrag des Vektors dem zu einem bestimmten Zeitpunkt gesendeten Bit des ersten Subträgers entspricht, der zweite Eintrag dem zu dem bestimmten Zeitpunkt gesendeten Bit des zweiten Subträgers, usw.

Bei der ersten Mehrzahl von Subträgern handelt es sich vorzugsweise um alle dem Sender zur Versendung von Informationen zur Verfügung stehende Subträger. Dies kann der gesamten Breite des Frequenzbandes entsprechen, oder auch einem Teil des Frequenzbandes, so z.B. wenn andere Teile des Frequenzbandes von dem Sender zum Empfang von Informationen genutzt wird. Weiterhin ist es auch möglich, dass dem Sender neben den Subträgern der ersten Mehrzahl weitere Subträger zur Versendung von Informationen zur Verfügung stehen.

In Weiterbildung der Erfindung sendet der Sender dem Empfänger nach der Versendung der Synchronisationsbitfolge Nutzdaten auf einer Anzahl von Subträgern, welche kleiner ist als die erste Mehrzahl. Zusätzlich oder alternativ empfängt der Empfänger nach dem Empfang der Synchronisationsbitfolge von dem Sender Nutzdaten auf einer Anzahl von Subträgern, welche kleiner ist als die zweite Mehrzahl. Dies bedeutet, dass zur Versendung bzw. zum Empfang von Nutzdaten weniger Subträger zum Einsatz kommen können als zur Versendung bzw. zum Empfang der Synchronisationsbitfolge. Für die Nutzdaten können hierbei einer oder mehrere Subträger verwendet werden. Bei den Nutzdaten handelt es sich um nicht zu Synchronisationszwecken gesendete Information. Alternativ ist es auch möglich, dass der Sender dem Empfänger nach der Versendung der Synchronisationsbitfolge Nutzdaten auf einer Anzahl von Subträgern sendet, welche gleich der ersten Mehrzahl ist.

Es ist möglich, dass die erste und die zweite Mehrzahl der Subträger gleich sind. In diesem Fall empfängt der Empfänger jeden der Subträger, welchen der Sender zur gleichzeitigen Versendung der Synchronisationsbitfolge einsetzt. Dies ist vorteilhaft, da hierdurch die empfängerseitige Synchronisation optimiert wird. Es ist jedoch auch möglich, dass die erste Mehrzahl größer ist als die zweite Mehrzahl. In diesem Fall empfängt der Empfänger nur manche der Subträger, welche der Sender zur gleichzeitigen Versendung der Synchronisationsbitfolge einsetzt. Hierdurch werden bezüglich ihrer Empfangshardware schwächer ausgestattete Endgeräte unterstützt.

In Ausgestaltung der Erfindung empfängt ein weiterer Empfänger die Synchronisationsbitfolge gleichzeitig auf einer dritten von der zweiten Mehrzahl unterschiedlichen Mehrzahl von Subträgern. Dieser Empfang erfolgt gleichzeitig zum Empfang der Synchronisationsbitfolge auf der zweiten Mehrzahl von Subträgern durch den Empfänger. Somit existieren zumindest zwei Empfänger, welche die von dem Sender versendete Synchronisationsbitfolge empfangen, wobei sich die Anzahl der Subträger, auf welchen die Synchronisationsbitfolge von den beiden Empfängern empfangen wird, voneinander unterscheiden. Insbesondere kann die dritte Mehrzahl der Subträger eine Teilmenge der zweiten Mehrzahl von Subträgern sein. Dieses Vorgehen ist vorteilhaft, da hierdurch bezüglich ihrer Empfangskapazität unterschiedlich ausgestattete Empfänger gleichzeitig mit dem Sender kommunizieren können bzw. die Ausstrahlung der Synchronisationsbitfolge durch den Sender von diesen unterschiedlichen Empfängern zur Synchronisation verwendet werden kann.

Die Synchronisationsbitfolge kann zwei identische Bitfolgen umfassen. Vorteilhaft ist es hierbei, wenn dem Empfänger lediglich bekannt ist, dass die Synchronisationsbitfolge aus zwei identischen Bitfolgen besteht, sowie der Abstand und die Länge der beiden Bitfolgen. Die Bitfolgen an sich müssen dem Empfänger nicht bekannt sein. Bei den identischen Bitfolgen kann es sich um Nutzdaten handeln.

Mit Vorzug verwendet der Empfänger die Synchronisationsbitfolge für die Zeitsynchronisation und die Frequenzsynchronisation.

Besonders vorteilhaft ist es, wenn der Empfänger, insbesondere durch Verwendung einer dezimierten Version eines senderseitig verwendeten Filters, Bits aus einer empfangenen Bitfolge entfernt und die durch Entfernung der Bits verkürzte Bitfolge zur Synchronisation verwendet. Z.B. kann der Empfänger in gleichmäßigen Bit-Abständen die gleiche Anzahl von aufeinander folgenden Bits aus einer empfangenen Bitfolge entfernen. Letzteres bedeutet, dass der Empfänger n Bits, mit n einer ganzen Zahl, aus der empfangenen Bitfolge herausstreicht, dann m Bits nicht herausstreicht, dann wieder n Bits herausstreicht, dann m Bits nicht herausstreicht, usw.

Beispielsweise kann die Anzahl der entfernten Bits jeweils gleich der um die Zahl Eins verminderten zweiten Mehrzahl sein. Empfängt der Empfänger die Synchronisationsbitfolge beispielsweise auf 5 Subträgern, so streicht er gemäß der betrachteten Ausgestaltung jeweils 4 aufeinander folgende Bits aus der empfangenen Bitfolge. Ferner ist dann die Anzahl der nicht entfernten Bits zwischen den in gleichmäßigen Bitabständen entfernten Anzahlen von Bits jeweils gleich Eins. Bei dem Empfang der Synchronisationsbitfolge auf 5 Subträgern ist es somit vorteilhaft, wenn der Empfänger 4 aufeinander folgende Bits streicht, das nächste Bit nicht streicht, die folgenden 4 Bits streicht, das nächste Bit nicht streicht, usw.

In Ausgestaltung der Erfindung entfernt der Empfänger zur zeitlichen Synchronisation wiederholt die Anzahl von aufeinander folgenden Bits aus der empfangenen Bitfolge, wobei sich die Zusammensetzung der entfernten Bits von Wiederholung zu Wiederholung unterscheidet, und führt eine Korrelation zwischen der Synchronisationsbitfolge und der jeweiligen durch die Entfernung der Bits verkürzten empfangenen Bitfolge durch. Dies bedeutet, dass das Muster der Streichung der Bits bei gleich bleibender Anzahl entfernter zusammenhängender Bits über die empfangene Bitfolge verschoben wird. Dies kann so lange wiederholt werden, bis durch die Korrelationsbildung festgestellt wird, dass Synchronisation erzielt wurde.

Mit Vorzug erfolgt die Synchronisation im Empfänger vor der Transformation der empfangenen Bitfolge von dem Zeitbereich in den Frequenzbereich. Dies hat den Vorteil, dass die Synchronisation nicht durch die Transformation von dem Zeitbereich in den Frequenzbereich verzögert wird.

Der erfindungsgemäße Sender zur Versendung von Informationen per Funk zu einem Empfänger weist Mittel auf zum Kommunizieren unter Verwendung eines in eine Mehrzahl von Subträgern aufgeteilten Frequenzbandes, sowie Mittel zum Versenden einer Synchronisationsbitfolge zur empfängerseitigen Verwendung zur Synchronisation. Erfindungsgemäß umfasst der Sender weiterhin Mittel zum Versenden der Synchronisationsbitfolge gleichzeitig auf einer ersten Mehrzahl von Subträgern.

Der erfindungsgemäße Empfänger zum Empfangen von Informationen per Funk von einem Sender weist Mittel auf zum Kommunizieren unter Verwendung eines in eine Mehrzahl von Subträgern aufgeteilten Frequenzbandes, sowie Mittel zum Empfangen einer Synchronisationsbitfolge und zur Verwendung der Synchronisationsbitfolge zur Synchronisation. Erfindungsgemäß umfasst der Empfänger weiterhin Mittel zum Empfangen der Synchronisationsbitfolge gleichzeitig auf einer zweiten Mehrzahl von Subträgern.

Sowohl der erfindungsgemäße Sender als auch der erfindungsgemäße Empfänger eignen sich insbesondere zur Durchführung des jeweiligen erfindungsgemäßen Verfahrens, wobei dies auch auf die Ausgestaltungen und Weiterbildungen zutreffen kann. Hierzu können sie weitere geeignete Mittel umfassen.

Im folgenden wird die Erfindung anhand eines Ausführungsbeispiels näher erläutert. Dabei zeigen:
- Figur 1:: einen Ausschnitt aus einem Funkkommunikationssystem,
- Figur 2:: eine Aufteilung von Funkressourcen,
- Figur 3:: schematisch Teile der senderseitigen Signalverarbeitung,
- Figur 4:: schematisch Teile der empfängerseitigen Signalverarbeitung.

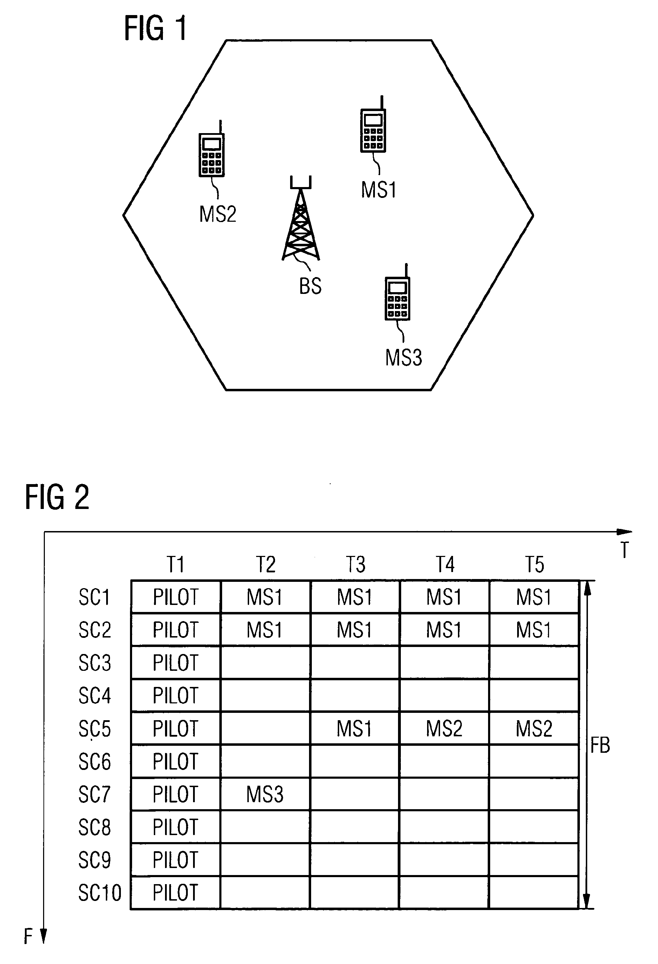

Der in Figur 1 dargestellte Ausschnitt aus einem Funkkommunikationssystem zeigt den schematisch als Sechseck abgebildeten Funkabdeckungsbereich der Basisstation BS. Bei der Basisstation BS kann es sich z.B. um eine netzseitige Funkstation eines zellularen Funkkommunikationssystems oder um einen Funkzugangspunkt eines lokalen Funkkommunikationssystems handeln. Gegebenenfalls vorhandene weitere netzseitige Einrichtungen sind der Übersichtlichkeit halber nicht dargestellt. In dem Funkabdeckungsbereich der Basisstation BS befinden sich die Teilnehmerstationen MS1, MS2 und MS3. Bei den Teilnehmerstationen MS1, MS2 und MS3 kann es sich um stationäre oder mobile Funkstationen handeln, z.B. um Telefone und/oder Computer.

Die Kommunikation zwischen der Basisstation BS und den Teilnehmerstationen MS1, MS2 und MS3 erfolgt auf einem in Figur 2 dargestellten Frequenzband FB. Figur 2 zeigt die Aufteilung der Funkressource im Frequenzbereich F, in vertikaler Richtung aufgetragen, und im Zeitbereich T, in horizontaler Richtung aufgetragen. In Kombination hierzu können weitere Teilnehmerseparierungsverfahren zum Einsatz kommen. Das Frequenzband FB ist in zehn gleich breite Subträger SC1, SC2, SC3, SC4, SC5, SC6, SC7, SC8, SC9 und SC10 aufgeteilt. Es handelt sich bei den 10 Subträgern lediglich um ein Beispiel, die Anzahl der verwendeten Anzahl von Subträgern kann von verschiedenen Anforderungen abhängen. Die Zeit ist in gleich lange Zeitschlitze aufgeteilt, wobei in Figur 2 fünf Zeitschlitze T1, T2, T3, T4 und T5 dargestellt sind. Bei den fünf Zeitschlitzen T1, T2, T3, T4 und T5 handelt es sich um einen Zeitrahmen für die Kommunikation in Abwärtsrichtung, d.h. für eine Nachrichtenversendung von der Basisstation BS zu den Teilnehmerstationen MS1, MS2 und MS3. Auch bei der Aufteilung des Abwärtszeitrahmens in fünf Zeitschlitze T1, T2, T3, T4 und T5 handelt es sich lediglich um ein Beispiel.

Gemäß der Erfindung sendet die Basisstation BS in dem ersten Zeitschlitz T1 auf jedem der Subträger SC1, SC2, SC3, SC4, SC5, SC6, SC7, SC8, SC9 und SC10 die Präambel PILOT. Bei der Präambel PILOT handelt es sich um eine Bitfolge, welche aus zwei identischen Bitsequenzen einer bestimmten Länge besteht und zur Zeitsynchronisation, vorzugsweise auch zur Frequenzsynchronisation eingesetzt wird. Die Bitsequenzen der Präambel PILOT sind den Teilnehmerstationen MS1, MS2 und MS3 nicht bekannt. Bekannt hingegen ist den Teilnehmerstationen MS1, MS2 und MS3 die Länge der Bitsequenzen, deren Abstand, sowie die Tatsache, dass die Präambel PILOT aus zwei identischen Bitsequenzen besteht.

Die auf die Präambelversendung folgenden Zeitschlitze T2, T3, T4 und T5 werden für die Versendung von Nutzdaten von der Basisstation BS an die Teilnehmerstationen MS1, MS2 und MS3 eingesetzt, d.h. für nicht zu Synchronisierungszwecken versendete Nachrichten. Einer Teilnehmerstation MS1, MS2 oder MS3 können für den Empfang von Nutzdaten beliebige Kombinationen aus Zeitschlitz und Subträger zugewiesen werden. Gemäß dem Beispiel der Figur 2 sind der Teilnehmerstation MS1 die beiden Subträger SC1 und SC2 während den Zeitschlitzen T2 bis T5, sowie der Subträger SC5 während dem Zeitschlitz T3 zugewiesen, der Teilnehmerstation MS2 der Subträger SC5 während den Zeitschlitzen T4 und T5, sowie der Teilnehmerstation MS3 der Subträger SC7 während dem Zeitschlitz T2. Der Vorteil der Funkressourcenzuweisung gemäß Figur 2 liegt darin, dass eine Teilnehmerstation zur Auswertung der Nutzdaten nicht das gesamte Frequenzband FB prozessieren muss, sondern nur ein Teilspektrum bzw. eine Untermenge der verfügbaren Subträger, im Extremfall nur einen Subträger. Durch die Verarbeitung lediglich eines Teils der Subträger betreffend die Nutzdaten lässt sich die Komplexität des jeweiligen Endgerätes stark vereinfachen.

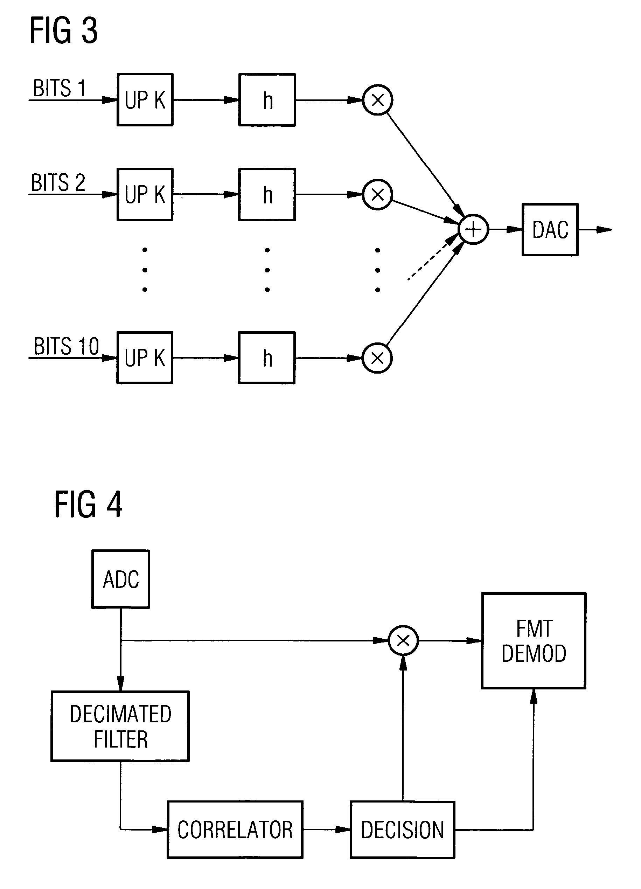

Senderseitig liegt pro Zeitschlitz und Subträger eine zu versendende Bitfolge vor, für den ersten Zeitschlitz T1 beispielsweise für jeden Subträger SC1 bis SC10 die Präambel PILOT, für den zweiten Zeitschlitz T2 für den ersten Subträger SC1 eine Bitfolge für die Teilnehmerstation MS1, für den zweiten Subträger SC1 eine Bitfolge für die Teilnehmerstation MS1, und für den siebten Subträger SC7 eine Bitfolge für die Teilnehmerstation MS3. Diese Frequenzbereichsbitfolgen werden durch die senderseitige Signalverarbeitung vor der Funkversendung in Zeitbereichsbitfolgen umgewandelt. Dies erfolgt bei OFDM durch eine inverse Fouriertransformation (IFFT, Fast Fourier Transform), oder bei FMT wie im folgenden anhand von Figur 3 näher erläutert.

Figur 3 zeigt die senderseitige Signalverarbeitung in der Basisstation BS. Es liegt die Bitfolge BITS 1 für den ersten Subträger SC1 vor, die Bitfolge BITS 2 für den zweiten Subträger SC2, usw., und die Bitfolge BITS 10 für den zehnten Subträger SC10. In den Bestandteilen UP K erfolgt für jeden Subträger SC1 bis SC10 eine Überabtastung der jeweiligen Bitfolge BITS 1 bis BITS 10. Daraufhin passieren die Bitfolgen BITS 1 bis BITS 10 für jeden Subträger SC1 bis SC10 einen Filter h, wobei für jeden Subträger die gleiche Filterfunktion verwendet wird. Bei FMT sind die Filterfunktionen frei wählbar. Vorzugsweise wird ein einfaches Prototypenfilter, z.B. ein Root Raised Cosine Filter, eingesetzt. In den auf die Filter h folgenden durch Kreuze symbolisierten Mischern werden die Bitfolgen BITS 1 bis BITS 10 auf die Frequenz des jeweiligen Subträgers gesetzt, indem jedes Bit mit einer Exponentialfunktion multipliziert wird, deren komplexer Exponent von der Frequenz des jeweiligen Subträgers abhängt. Diese Bitfolgen werden summiert, und im Anschluss in der Einrichtung DAC in analoge Signale umgewandelt, welche daraufhin per Funk versendet werden.

Da während dem ersten Zeitschlitz T1 auf jedem Subträger SC1 bis SC10 die gleiche Präambel PILOT gesendet wird, weist ein Symbol des ersten Zeitschlitzes T1 ausschließlich die gleichen Einträge auf, wobei dies für alle Symbole des ersten Zeitschlitzes T1 gilt. Ein Symbol ist hierbei ein Vektor, bestehend aus zu einem bestimmten Zeitpunkt auf den Subträgern SC1 bis SC10 zu versendenden Bits. Liegt als erstes Bit der Präambel PILOT beispielsweise eine 1 vor, so lautet das hierzu gehörige Symbol bei 10 Subträgern, auf welchen die Präambel PILOT versendet wird: (1, 1, 1, 1, 1, 1, 1, 1, 1, 1). Durch die Umwandlung eines im Frequenzbereich konstanten Symbols in den Zeitbereich, bei OFDM über eine inverse Fouriertransformation oder bei FMT gemäß Figur 3, entsteht eine Zeitbereichsbitfolge bestehend aus einem einzigen Peak zu einem bestimmten Zeitpunkt, das so genannte Dirac-Delta.

Wie dieser Dirac-Impuls im Zeitbereich aussieht, und wie viele solcher Dirac-Impulse sich bei der Umwandlung eines Frequenzbereichs-Symbols in den Zeitbereich ergeben, hängt von der eingesetzten Modulationsart ab. Bei OFDM wird ein konstantes Frequenzbereichs-Symbol zu einem einzigen Dirac-Impuls transformiert. Die Höhe des Dirac-Impulses ist gleich dem Wert des konstanten Eintrags des Frequenzbereichs-Symbols. Die Dirac-Impulse von aufeinander folgenden Frequenzbereichs-Symbolen folgen in einem Abstand aufeinander, welcher gleich der Anzahl der für die Versendung der Präambel PILOT verwendeten Subträger ist. Zwischen den Dirac-Impulsen befinden sich Nullstellen, deren Anzahl gleich der Anzahl der für die Versendung der Präambel PILOT verwendeten Subträger minus eins ist.

Bei der FMT Modulation bestimmen die Anzahl M der für die Versendung der Präambel PILOT verwendeten Subträger, die Länge L des senderseitig verwendeten Prototypenfilters, und der Überabtastfaktor K die Darstellung der Präambel PILOT im Zeitbereich. Wegen des Filters wird ein konstantes Frequenzbereichs-Symbol in eine Mehrzahl von Dirac-Impulsen transformiert. Die Höhe der Dirac-Impulse hängt jeweils von dem Wert des konstanten Eintrags des Frequenzbereichs-Symbols, sowie von den Filterkoeffizienten ab. Die Anzahl der Dirac-Impulse wird durch M und L bestimmt. Zwischen den Dirac-Impulsen eines einzelnen konstanten Frequenzbereichs-Symbols existieren M-1 Nullstellen. Die Gruppe von Dirac-Impulsen des jeweils nächsten Frequenzbereichs-Symbols beginnt K Bitstellen nach dem ersten Dirac-Impuls des vorigen Frequenzbereichs-Symbols. Wenn beispielsweise ein FMT-System mit den Parametern M=10, L=61 und K=13 betrachtet wird, weist eine aus mehreren Frequenzbereichs-Symbolen bestehende in den Zeitbereich transformierte Sequenz die folgende Struktur auf: bei der inversen Fourier-Transformation wird ein Frequenzbereichs-Symbol in sieben, entsprechend dem aufgerundeten Ganzzahligen von L/M, Peaks transformiert, die jeweils durch neun, entsprechend M-1, Bitstellen getrennt sind. Diese neun Bitstellen enthalten keine Information, die zum Frequenzbereichs-Symbol gehört, sondern lediglich Rauschen und gegebenenfalls von anderen Frequenzbereichs-Symbolen stammende Interferenz.

Die beschriebene zeitliche Struktur, welche sich aus der Transformation mehrerer aus gleichen Einträgen bestehender aufeinander folgender Frequenzbereichs-Symbole ergibt, sowie die Anwendung des im folgenden vorgestellten empfängerseitigen Verfahrens ermöglichen eine effiziente und zuverlässige Synchronisation bei Mehrträgersystemen.

Figur 4 zeigt schematisch Teile der empfängerseitigen Signalverarbeitung. Der Empfänger, d.h. eine der Teilnehmerstationen MS1, MS2 oder MS3, empfängt eine analoge Signalfolge, welche in dem Bestandteil ADC in eine digitale ZeitbereichsBitfolge umgewandelt wird. Es erfolgt eine Zeitsynchronisation, indem der Empfänger die zeitliche Lage der Präambeln PILOT ermittelt. Diese Synchronisation erfolgt unter Verwendung aller Subträger, die Teilnehmerstation MS3 beispielsweise verwendet nicht nur den ihr zugewiesenen Subträger SC7, sondern die Subträger SC1 bis SC10. Zur zeitlichen Synchronisierung muss der Empfänger in dem Bestandteil CORRELATOR eine Korrelation zwischen den beiden identischen Teilen der Präambel PILOT durchführen. Durch Verschieben dieser Korrelation über die empfangene Folge von Abtastwerten und Vergleich der Korrelationsergebnisse kann die zeitliche Lage der Präambel PILOT und somit der Beginn des Zeitschlitzes T1 bestimmt werden.

Wie bereits erläutert wird ein Frequenzbereichs-Symbol in eine Mehrzahl von äquistanten Peaks im Zeitbereich transformiert, wobei es bei FMT und nicht rechteckigförmiger Filterung im Frequenzbereich zu Intersymbolstörungen kommt. Es wird empfängerseitig der an die oben beschriebene Präambelstruktur im Zeitbereich angepasste Filter DECIMATED FILTER vor der Korrelation in dem Bestandteil CORRELATOR verwendet. Dieser präambelangepasste Filter DECIMATED FILTER ist eine dezimierte Version des Prototypenfilters, welchen der Sender verwendet, d.h. die Koeffizienten des Filters DECIMATED FILTER sind Null an den Stellen, an welchen sich die Nullen zwischen den Dirac-Impulsen befinden. Für die Werte der Peaks gelten die Koeffizienten des Prototypenfilters. Dieser Filter DECIMATED FILTER hat die vorteilhafte Eigenschaft, dass es Rauschen und Intersymbolstörungen zwischen den Peaks ausfiltert. Dies bringt einen Energiegewinn, welcher den Einsatz einer sehr kurzen Präambel erlaubt. Außerdem vermindert der Filter DECIMATED FILTER die für die Korrelation negative Auswirkung des Prototypenfilters des Senders.

Der präambelangepasste Filter DECIMATED FILTER erweist sich auch als vorteilhaft bei der Skalierung des Systems. Wenn sich die Anzahl der Subträger, welche zur Versendung der Präambel verwendet werden, und/oder der Überabtastfaktor ändert, resultiert dies in einer veränderten Präambelstruktur im Zeitbereich, so dass empfängerseitig ein veränderter Filter DECIMATED FILTER zum Einsatz kommen muss. Die Konstruktion des neuen Filters DECIMATED FILTER ergibt sich, indem die Koeffizienten des Prototypenfilters an den entsprechenden Stellen verwendet werden. Es kann empfängerseitig ein adaptiver Filter DECIMATED FILTER zum Einsatz kommen, z.B. durch Verwendung von Zeigern, die auf die entsprechenden Prototypenfilteranzapfungen verweisen. Diese Zeiger sind schnell und einfach durch Signalisierung der neuen Parameter festzulegen.

Nach der beschrieben Filterung durch den Filter DECIMATED FILTER steht eine Abtastfolge zur Verfügung, welche die Suche nach der zeitlichen Lage der Präambel durch die Korrelation zweier identischer aufeinander folgender Abtastfolgen begünstigt. Das Ergebnis der Korrelation des Bestandteils CORRELATOR wird in dem Bestandteil DECISION für die Entscheidung über die Synchronisation verwendet. Die Entscheidung darüber, ob zeitliche Synchronisation erreicht wurde, kann auf an sich bekannte Weise erfolgen, indem z.B. das Korrelationsergebnis mit einem Schwellenwert verglichen wird. Zeitliche Synchronisation ist erreicht, wenn die Peaks im Zeitbereich des ersten Frequenzbereichs-Symbols der Präambel PILOT genau mit den Stellen der von Null verschiedenen Filterkoeffizienten des präambelangepassten Filters DECIMATED FILTER übereinstimmten. Genau dann kommt es zu einem Maximum der Korrelation. Ist dies nicht der Fall, wird erneut gefiltert und korreliert, wobei der Filter DECIMATED FILTER über die empfangene Folge von Abtastwerten verschoben wird, bis von dem Bestandteil DECISION zeitliche Synchronisation festgestellt wird.

Ist die zeitliche Synchronisation erreicht, so ist dem Empfänger die zeitliche Lage der Zeitschlitze mit den Nutzdaten bekannt. Indem das Argument der Korrelationsfunktion im Zeitpunkt, zu welchem Zeitsynchronisation vorliegt, ermittelt wird, kann eine Frequenzschätzung und dementsprechend auch eine Frequenzsynchronisation nach bekannten Methoden durchgeführt werden.

Die Frequenzsynchronisation erfolgt in dem in Figur 4 als x symbolisiertem Bestandteil. Eine Frequenzkorrektur des empfangenen Signals ist nötig, da durch die Funkübertragung einen Frequenzverschiebung erfolgt, z.B. durch den DopplerEffekt. Weiterhin wird das Ergebnis der zeitlichen Synchronisation von dem Bestandteil DECISION zur zeitlichen Synchronisation bei der Verarbeitung der Nutzdaten an den Bestandteil FMT DEMOD weitergegeben.

In dem Bestandteil FMT DEMOD erfolgen die zur Gewinnung der auf den einzelnen Subträgern gesendeten Bitfolgen nötigen Umkehrschritte der senderseitigen Signalverarbeitung. Bei OFDM beispielsweise findet eine Fouriertransformation statt. Bei einer senderseitigen Verarbeitung gemäß Figur 3 wird empfängerseitig in dem Bestandteil FMT DEMOD die Bitfolge der Nutzdaten in zehn Äste gemäß der Anzahl der Subträger parallelisiert, für jeden Subträger mit einer Exponentialfunktion, deren komplexer Exponent gemäß der Senderseite von der Frequenz des jeweiligen Subträgers abhängt, multipliziert, gemäß der senderseitigen Filterung gefiltert und gemäß der senderseitigen Überabtastung unterabgetastet.

Bislang wurde der Fall beschrieben, dass der Sender die Präambel PILOT auf zehn Subträgern sendet, und der Empfänger die Informationen der zehn Subträger empfängt und zur Synchronisation verwendet. Es ist jedoch auch möglich, dass der Empfänger lediglich eine Untermenge der vom Sender verwendeten Subträger empfängt und auswertet. Während bei Empfang aller zehn Subträger die Signalenergie in den Peaks zehnfach überhöht ist gegenüber der Signalenergie einer auf lediglich einem Subträger gesendeten Präambel, liegt bei empfängerseitiger Auswertung von lediglich vier Subträgern eine vierfache Überhöhung vor. Der Korrelationsgewinn ist demnach umso günstiger, je mehr Subträger der Empfänger zu Synchronisierungszwecken auswertet. Es ist vorteilhaft, einer beschränkten Anzahl an ausgewerteten Subträgern Rechnung zu tragen, indem eine von dem Bestandteil DECISION verwendete Entscheidungsschwelle im Vergleich zur Entscheidungsschwelle bei Auswertung mehrerer Subträger abgesenkt wird.

Das beschriebene Verfahren unterstützt somit eine skalierbare Luftschnittstelle bzw. verschiedenartige Endgeräte, welche verschieden breite Frequenzbereiche empfangen können. Senderseitig wird bezüglich der Versendung der Präambel PILOT keine Unterscheidung zwischen diesen verschiedenartigen Teilnehmerstationen gemacht, d.h. die Basisstation versendet die gleiche Präambel PILOT auf allen für die Abwärtsübertragung verwendeten Subträgern. Die Ausgestaltung der Präambel PILOT, insbesondere die Länge der Präambel PILOT, wird nicht an die Fähigkeiten der verschiedenen Endgeräte in Bezug auf den empfangbaren Frequenzbereich angepasst.

Die Versendung der gleichen Präambel PILOT auf mehreren Subträgern weist den Vorteil auf, dass im Zeitbereich die sinnvolle Information auf wenige Zeitpunkte beschränkt ist. Durch diese Beschränkung ist die Signalenergie in den Peaks größer, und zwar im um einen Faktor entsprechend der Anzahl der von dem Empfänger ausgewerteten Subträger gegenüber der Signalenergie bei Auswertung eines Subträgers, wodurch der Korrelationsgewinn erhöht ist. Hierdurch wird die Entscheidung darüber, ob eine zeitliche Synchronisierung erreicht wurde oder nicht, erleichtert, d.h. die zeitliche Synchronisation erfolgt mit gesteigerter Zuverlässigkeit. Weiterhin ist von Vorteil, dass aufgrund des Ausdünnens der für die Korrelation auszuwertenden Bitfolge im Empfänger die Größe des Filters und auch des Korrelators verringert werden kann, so dass die empfängerseitige Komplexität vermindert wird. Die Bits zwischen den Peaks herauszulassen ist überdies aus dem Grund von Vorteil, da diese Bits übermäßig stark von dem bei der Funkübertragung hinzugefügten Rauschen beeinträchtigt sind, und somit die Feststellung der zeitlichen Synchronisation erheblich erschweren würden.

Welchen und wie viele Subträger ein Empfänger empfängt und auswertet, wird durch einen Bandpassfilter bestimmt. Wenn dieser Bandpassfilter den Empfang aller Subträger ermöglicht, kann mit einem weiteren digitalen Bandpassfilter vor dem Bestandteil FMT DEMOD die Anzahl der vom Empfänger für den Nutzdatenempfang genutzten Subträger eingeschränkt werden. Hierdurch können alle Subträger für die Synchronisation verwendet werden. Dies erhöht die Zuverlässigkeit der Synchronisation bei gleichzeitiger Reduzierung der Komplexität der Empfängerstufe.

Im allgemeinen gilt, dass, um eine Synchronisation einer bestimmten Qualität zu ermöglichen, eine Präambel einer bestimmten Länge eingesetzt werden muss. Aufgrund des beschriebenen effizienten Verfahrens zur Ermittlung der zeitlichen Synchronisierung wird bei hoher Qualität der Synchronisation keine lange Präambel benötigt. So erweist sich beispielsweise die Verwendung von lediglich 8 Abtastwerten für die Präambel als geeignet. Hierdurch ist eine Verkürzung der Präambel im Vergleich zu dem Fall möglich, dass die Präambel lediglich auf einzelnen Subträgern gesendet wird, oder dass die Präambel senderseitig der Zeitbereichsbitfolge hinzugefügt wird. Eine Verkürzung der Präambel bedeutet, dass mehr Zeit für die Übertragung der Nutzdaten zur Verfügung steht, da der Signalisierungsoverhead sinkt, so dass die Ausnutzung der knappen Funkressourcen verbessert wird. Bei Bedarf können vor oder nach der Präambel einige Leerstellen zur Kompensation der Filter- und Mehrwegeverzögerungen hinzugefügt werden, deren Anzahl vor allem von der Länge des Prototypenfilters abhängt. Die verwendete Präambel sollte die für eine Synchronisationsfolge geeigneten Auto- und Kreuzkorrelationseigenschaften aufweisen.

Die Versendung der gleichen Präambel auf mehreren Subträgern ermöglicht eine schnelle Synchronisation. Denn wie anhand von Figur 4 näher erläutert, kann die Synchronisation im Zeitbereich erfolgen, d.h. bevor eine Transformation in den Frequenzbereich erfolgt ist. Hierdurch kann die Synchronisation zu einem frühen Zeitpunkt der empfängerseitigen Signalverarbeitung erfolgen, während durch eine vorhergehende Transformation in den Frequenzbereich eine Zeitverzögerung auftreten würde. Diese Zeitverzögerung muss hingegen in Kauf genommen werden, wenn auf jedem Subträger eine unterschiedliche Präambel gesendet wird.

## Patentansprüche

1. Verfahren zur Übertragung von Informationen per Funk von einem Sender (BS) zu einem Empfänger (MS1, MS2, MS3), bei dem
zur Kommunikation ein in eine Mehrzahl von Subträgern (SC1, SC2, SC3, SC4, SC5, SC6, SC7, SC8, SC9, SC10) aufgeteiltes Frequenzband (FB) eingesetzt wird,
der Sender (BS) eine Synchronisationsbitfolge (PILOT) versendet zur empfängerseitigen Verwendung zur Synchronisation,
**dadurch gekennzeichnet,**
**dass** der Sender (BS) die Synchronisationsbitfolge (PILOT) gleichzeitig auf einer ersten Mehrzahl von Subträgern (SC1, SC2, SC3, SC4, SC5, SC6, SC7, SC8, SC9, SC10) sendet.

2. Verfahren nach Anspruch 1, bei dem
der Sender (BS) dem Empfänger (MS1, MS2, MS3) nach der Versendung der Synchronisationsbitfolge (PILOT) Nutzdaten auf einer Anzahl von Subträgern (SC1, SC2, SC3, SC4, SC5, SC6, SC7, SC8, SC9, SC10) sendet, welche kleiner ist als die erste Mehrzahl.

3. Verfahren zur Übertragung von Informationen per Funk von einem Sender (BS) zu einem Empfänger (MS1, MS2, MS3), bei dem
zur Kommunikation ein in eine Mehrzahl von Subträgern (SC1, SC2, SC3, SC4, SC5, SC6, SC7, SC8, SC9, SC10) aufgeteiltes Frequenzband (FB) eingesetzt wird,
der Empfänger (MS1, MS2, MS3) eine Synchronisationsbitfolge (PILOT) empfängt und zur Synchronisation verwendet,
**dadurch gekennzeichnet,**
**dass** der Empfänger (MS1, MS2, MS3) die Synchronisationsbitfolge (PILOT) gleichzeitig auf einer zweiten Mehrzahl von Subträgern (SC1, SC2, SC3, SC4, SC5, SC6, SC7, SC8, SC9, SC10) empfängt.

4. Verfahren nach Anspruch 3 und einem der Ansprüche 1 oder 2, bei dem
die erste Mehrzahl und die zweite Mehrzahl gleich sind.

5. Verfahren nach Anspruch 3 und einem der Ansprüche 1 oder 2, bei dem
die erste Mehrzahl größer ist als die zweite Mehrzahl.

6. Verfahren nach Anspruch 1 und 3 oder nach einem der Ansprüche 3 bis 5, bei dem
ein weiterer Empfänger (MS1, MS2, MS3) die Synchronisationsbitfolge (PILOT) gleichzeitig auf einer dritten von der zweiten Mehrzahl unterschiedlichen Mehrzahl von Subträgern (SC1, SC2, SC3, SC4, SC5, SC6, SC7, SC8, SC9, SC10) empfängt gleichzeitig zum Empfang der Synchronisationsbitfolge (PILOT) auf der zweiten Mehrzahl von Subträgern (SC1, SC2, SC3, SC4, SC5, SC6, SC7, SC8, SC9, SC10) durch den Empfänger (MS1, MS2, MS3).

7. Verfahren nach einem der Ansprüche 1 bis 6, bei dem
die Synchronisationsbitfolge (PILOT) zwei identische Bitsequenzen umfasst.

8. Verfahren nach einem der Ansprüche 1 bis 7, bei dem
der Empfänger (MS1, MS2, MS3) die Synchronisationsbitfolge (PILOT) für die Zeitsynchronisation und die Frequenzsynchronisation verwendet.

9. Verfahren nach einem der Ansprüche 1 bis 8, bei dem
der Empfänger (MS1, MS2, MS3) Bits aus einer empfangenen Bitfolge entfernt und die durch Entfernung der Bits verkürzte Bitfolge zur Synchronisation verwendet.

10. Verfahren nach einem der Ansprüche 1 bis 9, bei dem
die Synchronisation im Empfänger (MS1, MS2, MS3) vor der Transformation der empfangenen Bitfolge von dem Zeitbereich in den Frequenzbereich erfolgt.

11. Verfahren nach einem der Ansprüche 3 bis 10, bei dem
der Empfänger (MS1, MS2, MS3) nach dem Empfang der Synchronisationsbitfolge (PILOT) von dem Sender (BS) Nutzdaten auf einer Anzahl von Subträgern (SC1, SC2, SC3, SC4, SC5, SC6, SC7, SC8, SC9, SC10) empfängt, welche kleiner ist als die zweite Mehrzahl.

12. Sender (BS) zur Versendung von Informationen per Funk zu einem Empfänger (MS1, MS2, MS3), mit
Mitteln zum Kommunizieren unter Verwendung eines in eine Mehrzahl von Subträgern (SC1, SC2, SC3, SC4, SC5, SC6, SC7, SC8, SC9, SC10) aufgeteilten Frequenzbandes (FB), Mitteln zum Versenden einer Synchronisationsbitfolge (PILOT) zur empfängerseitigen Verwendung zur Synchronisation,
**gekennzeichnet durch**
Mittel zum Versenden der Synchronisationsbitfolge (PILOT) gleichzeitig auf einer ersten Mehrzahl von Subträgern (SC1, SC2, SC3, SC4, SC5, SC6, SC7, SC8, SC9, SC10).

13. Empfänger (MS1, MS2, MS3) zum Empfangen von Informationen per Funk von einem Sender (BS), mit
Mitteln zum Kommunizieren unter Verwendung eines in eine Mehrzahl von Subträgern (SC1, SC2, SC3, SC4, SC5, SC6, SC7, SC8, SC9, SC10) aufgeteilten Frequenzbandes (FB), Mitteln zum Empfangen einer Synchronisationsbitfolge (PILOT) und zur Verwendung der Synchronisationsbitfolge (PILOT) zur Synchronisation,
**gekennzeichnet durch**
Mittel zum Empfangen der Synchronisationsbitfolge (PILOT) gleichzeitig auf einer zweiten Mehrzahl von Subträgern (SC1, SC2, SC3, SC4, SC5, SC6, SC7, SC8, SC9, SC10).
